# EUROPÄISCHE PATENTSCHRIFT

(11) **EP 3 659 900 B1**
(45) Veröffentlichungstag und Bekanntmachung des Hinweises auf die Patenterteilung: **19.07.2023**
(21) Anmeldenummer: 18209438.3
(22) Anmeldetag: 30.11.2018
(51) Int. Cl.: B62D 25/00, B62D 29/00

(54) **DÄMMELEMENT FÜR EIN STRUKTURELEMENT EINES KRAFTFAHRZEUGS**
INSULATING ELEMENT FOR A STRUCTURAL ELEMENT OF A MOTOR VEHICLE
ÉLÉMENT AMORTISSEUR POUR UN ÉLÉMENT STRUCTURAL D'UN VÉHICULE AUTOMOBILE

(43) Veröffentlichungstag der Anmeldung: 03.06.2020
(73) Patentinhaber: SIKA TECHNOLOGY AG, 6340 Baar (CH); Bayerische Motoren Werke Aktiengesellschaft, 80809 München (DE)
(72) Erfinder: Poch, Sven, 6333 Hünenberg See (CH); Blowing, Paul, 85716 Unterschleissheim (DE)
(74) Vertreter: Sika Patent Attorneys

(56) Entgegenhaltungen:
- WO-A1-01/58741
- GB-A- 2 463 858
- US-A1- 2015 165 737
- US-A1- 2018 022 397

## Beschreibung

### Technisches Gebiet

Die Erfindung betrifft ein Strukturelement eines Kraftfahrzeugs, wobei das Strukturelement einen Hohlraum aufweist und im Hohlraum ein längliches Dämmelement angeordnet ist. Des Weiteren bezieht sich die Erfindung auf ein Dämmelement zum Dämmen von Strukturelementen in Kraftfahrzeugen.

### Stand der Technik

Vielfach weisen Bauelemente, wie beispielsweise Karosserien und/oder Rahmen von Transport- und Fortbewegungsmitteln, insbesondere von Kraftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zur Verhinderung des Eindringens von Feuchtigkeit und Verschmutzung, was zur Korrosion der Bauelemente führen kann, abgedichtet werden. Oft ist es auch wünschenswert, die Hohlräume und somit das Bauelement zu verstärken, jedoch das geringe Gewicht dieser Bauart beizubehalten. Oftmals ist es auch notwendig, die Hohlräume und somit die Bauelemente zu dämmen, um Geräusche oder Vibrationen, die ansonsten dem Hohlraum entlang oder durch diesen hindurch übertragen werden können, zu reduzieren. Viele dieser Hohlräume weisen zudem eine unregelmässige Form oder ein enges Ausmass auf, wodurch es erschwert wird, die Hohlräume richtig abzudichten, zu verstärken oder zu dämpfen. Siehe zum Beispiell US 2015/165737 A1.

Insbesondere im Automobilbau, aber auch im Flugzeug- und Bootsbau, werden deshalb Abdichtungselemente (englisch: *baffle*) verwendet, um Hohlräume abzudichten und/oder akustisch abzuschotten, und Verstärkungselemente (englisch: *reinforcer*) verwendet, um Hohlräume zu verstärken.

Ebenfalls bekannt in diesem Zusammenhang ist die Verwendung von Füllschäumen, beispielsweise 2-Komponenten-Polyurethanschäume, welche zur Abschottung von Hohlräumen gegenüber Lärm, Wasser, Feuchtigkeit und Staub sowie zur Verbesserung des Lärm- und Vibrationsabsorptionsverhalten in die Hohlräume eingebracht werden.

Derartige Füllschäume werden üblicherweise in Fluidform durch kleine Öffnungen in die Hohlräume eingespritzt, wo die eigentliche Schaumbildung aufgrund einer vorgängig erfolgen chemischen Aktivierung stattfindet. Ein solcher 2-Komponenten-Füllschaum auf Polyurethanbasis zum Abdichten von Fahrzeughohlräumen ist beispielsweise unter der Bezeichnung SikaBaffle^{®}-278 kommerziell erhältlich.

Insbesondere hinsichtlich Vibrations- oder Schalldämmung vermögen die derzeit bekannten Lösungen nicht vollständig zu überzeugen. Mit herkömmlichen Abdichtungselementen lässt sich eine Vibrations- oder Schalldämpfung üblicherweise nur in Längsrichtung des abgedichteten Hohlraums erreichen. Beim Einbringen von Füllschäumen von Aussen ist eine Kontrolle über die Verteilung der Schäume in den Hohlräumen zudem nur eine beschränkt möglich und es werden aufwändige Apparaturen zum Einbringen der Schäume benötigt, welche auf die jeweiligen Fahrzeugtypen angepasst werden müssen.

Es besteht daher nach wie vor Bedarf nach verbesserten Lösungen, welche die vorstehend genannten Nachteile nicht oder in geringerem Masse aufweisen.

### Darstellung der Erfindung

Der Erfindung liegt die Aufgabe zugrunde, eine verbesserte Lösung zur akustischen Dämmung von Strukturelementen in Kraftfahrzeugen zur Verfügung zu stellen. Insbesondere soll eine akustische Dämmung zugleich in longitudinaler Richtung als auch in transversaler Richtung eines Hohlraums ermöglicht werden. Weiter soll die Lösung nach Möglichkeit kostengünstiger und einfacher in der Handhabung sein als herkömmliche und bekannte Systeme.

Überraschenderweise wurde gefunden, dass die Aufgabe gemäss den Merkmalen des Hauptanspruchs gelöst werden kann. Kern der Erfindung ist demnach ein Strukturelement eines Kraftfahrzeugs, wobei das Strukturelement einen Hohlraum aufweist und im Hohlraum ein längliches Dämmelement angeordnet ist, wobei eine Längsachse des Dämmelements im Wesentliche parallel zur einer Längsachse des Hohlraums ausgerichtet ist und wobei das Dämmelement ein expandierbares Material umfasst, welches derart angeordnet und/oder ausgelegt ist, dass das Dämmelement den Hohlraum entlang der gesamten Länge des Dämmelements vollständig ausfüllt, wenn das expandierbare Material in expandiertem Zustand vorliegt.

Wie es sich gezeigt hat, ermöglicht die erfindungsgemässe Ausgestaltung und Anordnung des Dämmelements eine effektive Schalldämmung eines hohlen Strukturelements entlang längerer Abschnitte. Beispielsweise lassen sich längere Abschnitte in länglichen Strukturelementen, wie beispielsweise A-, B-, und C-Säulen, Seitenschwellern, Radläufen oder Dachrahmen, gezielt und präzise in definierten Abschnitten dämmen. Dies ist darauf zurückzuführen, dass die Längsachse des länglichen Dämmelements im Wesentlichen parallel zur Längsachse des Hohlraums ausgerichtet ist und der Hohlraum entlang der gesamten Länge des Dämmelements vollständig ausfüllt wird.

Dabei wird eine im Wesentlichen richtungsunabhängige Schalldämmung erreicht. Nebst einer Dämmung in longitudinaler Richtung, wie sie allenfalls mit herkömmlichen Baffles erreicht werden kann, ergibt sich auch eine Dämmung in transversaler Richtung. Dies dürfte darauf zurückzuführen sein, dass die erfindungsgemäss verwendeten Dämmelemente in expandiertem Zustand den Hohlraum vollständig ausfüllen ohne dass im Strukturelement schallübertragende Brücken gebildet werden.

Zudem können die erfindungsgemäss verwendeten Dämmelemente in einfacher Art und Weise bereits während der Herstellung in die Rohkarosserie eingesetzt werden. Ein nachträgliches Ausschäumen des Hohlraums im Strukturelement wie bei einem herkömmlichen Füllschaum entfällt damit, was die Herstellung erheblich vereinfacht und Kosten einspart.

Durch die Expansion des expandierbaren Materials wird ein Dämmelement erzeugt, welches den Hohlraum im Wesentlichen vollständig und präzise ausfüllt. Das expandierte Material steht dabei grossflächig in Kontakt mit der inneren Wandung des Hohlraums. Dies insbesondere entlang der gesamten Länge des Dämmelements.

Das expandierbare Material kann bezüglich Art, Menge und räumlicher Anordnung gezielt an den auszufüllenden Hohlraum angepasst werden, so dass dieses in expandiertem Zustand gleichmässig im Hohlraum verteilt vorliegt, was sich positiv auf die Dämmwirkung auswirkt.

Wird das Dämmelement vollständig aus wasserresistenten Materialen gefertigt, kann dieses zudem problemlos in feuchten oder wässrigen Umgebungen eingesetzt werden.

Das Dämmelement ist insbesondere derart ausgebildet, dass zwischen dem expandierbaren Material in nicht-expandiertem Zustand und einer Wandung des Hohlraums ein das Dämmelement entlang seiner gesamten Länge wenigstens teilweise umgebender Freiraum besteht. Mit anderen Worten ist das Dämmelement insbesondere derart ausgebildet, dass es in nicht-expandiertem Zustand ein geringeres Volumen aufweist als ein Abschnitt des Hohlraums in welchem das Dämmelement vorliegt. Damit kann das Dämmelement problemlos im Hohlraum montiert werden.

Ein Volumen des Dämmelements in nicht-expandiertem Zustand liegt insbesondere im Bereich von 10 - 95%, in Speziellen 20 - 60%, beispielsweise 30 - 40%, des Volumens des Hohlraumabschnitts in welchem das Dämmelement vorliegt.

Unter dem Begriff "längliches Dämmelement" wird kurz gesagt ein Dämmelement verstanden, welches zumindest im nicht-expandierten Zustand insbesondere länger ist als ein herkömmliches Abdichtungselement (englisch: *baffle*) im nicht-expandierten Zustand.

Ein Verhältnis der Länge des Dämmelements in nicht-expandiertem Zustand zu einer Breite und/oder zu einer Höhe des Dämmelements in nicht-expandiertem Zustand ist bevorzugt > 0.5, insbesondere > 1, vorteilhafterweise > 1.5, insbesondere > 2, im Speziellen > 4, besonders bevorzugt > 5 oder > 7. Bevorzugt liegt sowohl das Verhältnis der Länge des Dämmelements in nicht-expandiertem Zustand zur Breite des Dämmelements in nicht-expandiertem, als auch das Verhältnis der Länge des Dämmelements in nicht-expandiertem Zustand zur Höhe des Dämmelements in nicht-expandiertem in den angegeben Bereichen.

Ein Verhältnis der Länge des Dämmelements in nicht-expandiertem Zustand zu einer Breite und/oder zu einer Höhe des Dämmelements in nicht-expandiertem Zustand ist bevorzugt mindestens > 1.

Im Besonderen steht der Begriff "längliches Dämmelement" für ein Dämmelement, bei welchem die Länge des Dämmelements sowohl grösser ist als die Breite des Dämmelements als auch grösser ist als die Höhe des Dämmelements. Dies zumindest in nicht-expandierten Zustand, bevorzugt in nicht-expandierten Zustand als auch im expandierten Zustand.

Eine Länge des Dämmelements beträgt insbesondere 5 - 250 cm, bevorzugt 10 - 200 cm, im Speziellen, 20 - 150 cm, besonders bevorzugt 30 - 125 cm oder 40 - 100 cm. Eine typische Breite des Dämmelements misst z.B. 0.5 - 30 cm, insbesondere 1 - 20 cm, bevorzugt 2 - 20 cm, im Speziellen 3 - 15 cm oder 4 - 10 cm. Die Höhe des Dämmelements kann z.B. 0.5 - 30 cm, insbesondere 1 - 20 cm, bevorzugt 2 - 20 cm, im Speziellen 3 - 15 cm oder 4 - 10 cm, betragen.

Eine Länge des Hohlraums in welchem das des Dämmelement vorliegt, ist wenigstens so lange wie das Dämmelement, bevorzugt aber länger. Eine Breite des Hohlraumabschnitts in welchem das Dämmelement vorliegt, misst z.B. 0.5 - 30 cm, insbesondere 1 - 20 cm, bevorzugt 2 - 20 cm, im Speziellen 3 - 15 cm oder 4 - 10 cm. Eine Höhe des Hohlraumabschnitts in welchem das Dämmelement vorliegt, misst z.B. 0.5 - 30 cm, insbesondere 1 - 20 cm, bevorzugt 2 - 20 cm, im Speziellen 3 - 15 cm oder 4 - 10 cm.

Breite und Höhe des Hohlraums sind insbesondere grösser als die Breite und die Höhe des Dämmelements mit dem expandierbaren Material in nicht-expandiertem Zustand.

Unter einem "expandierbaren Material" ist vorliegend insbesondere ein schäumbares Material zu verstehen.

Das expandierbare Material weist bevorzugt eine Expansionrate von mehr als 500%, insbesondere mehr als 1'000%, im Speziellen von mehr als 1'500%, auf. Beispielsweise liegt die Expansionsrate im Bereich von 500 - 2000%, bevorzugt 800 - 1'500%. Dadurch verfügt das Dämmelement auch bei einer relativ geringen Menge an expandierbarem Material über ein geringes Volumen, so dass eine gute Montierbarkeit gewährleistet ist. Zugleich kann bei der Expansion ein optimaler Füllgrad im Hohlraum erreicht werden, welcher eine effektive Dämmung bewirkt. Für spezielle Anwenungen können aber auch expandierbare Materialien mit anderen Expansionsraten eingesetzt werden.

Als expandierbares Material kann grundsätzlich jedes beliebige Material eingesetzt werden, das kontrolliert zur Schäumung gebracht werden kann. Dieses Material kann dabei Verstärkungseigenschaften aufweisen oder auch nicht. Vorliegend sind expandierbare Materialen ohne Verstärkungseigenschaften bevorzugt.

Typischerweise ist das expandierbare Material derart ausgelegt, dass es thermisch, durch Feuchtigkeit und/oder durch elektromagnetische Strahlung geschäumt werden kann.

Ein solches expandierbares Material weist typischerweise ein chemisches und/oder ein physikalisches Treibmittel auf. Chemische Treibmittel sind organische und/oder anorganische Verbindungen, welche sich unter Einfluss von Temperatur, Feuchtigkeit, und/oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA. Die für die Schäumung erforderliche Wärme kann durch externe oder durch interne Wärmequellen, wie einer exothermen chemischen Reaktion, eingebracht werden.

Das expandierbare Material ist vorzugsweise bei einer Temperatur von < 200°C, bevorzugt < 160°C, insbesondere von 80°C bis 150°C, bevorzugt von 90°C bis 140°C, schäumbar. Dies insbesondere während einer Zeitdauer von 10 - 60 min. Damit kann es bei der Fahrzeugherstellung in bereits etablierten Prozessschritten geschäumt werden.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanociays enthalten. Beispielsweise weisen derartige Epoxidharzsysteme 20 bis 50 Gew.-% eines Epoxid-Füssigharzes, 0 bis 30 Gew.-% eines Epoxid- Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core- Shell Polymere und ähnliche dem Fachmann bekannte Systeme.

Ebenfalls geeignete schäumbare Materialien sind Treibmittel enthaltende einkomponentige Polyurethan-Zusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte > 50°C sein. Die Isocyanatgruppen des Polyisocyanats können beispielsweise mit Nucleophilen wie Caprolactam, Phenolen oder Benz-oxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als expandierbare Materialien Treibmittel enthaltende zweikomponentige Epoxid/Polyurethan-Zusammensetzungen, wie sie beispielweise beschrieben sind in WO 2005/080524 A1.

Weiterhin eignen sich als expandierbare Materialien Treibmittel enthaltende Ethylen-VinylAcetat-Zusammensetzungen.

Ebenfalls geeignete schäumbare Materialien werden beispielsweise unter dem Handelsmarinen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben sind.

In einer bevorzugten Ausführungsform ist das expandierbare Material derart ausgelegt, dass es in expandiertem Zustand eine offenzellige Zellstruktur bildet. Bei offenzelligen Zellstrukturen sind die Zellwände im expandierten oder geschäumten Zustand des Materials nicht geschlossen bzw. offen. Die einzelnen Zellen stehen somit in Fluidkommunikation miteinander. Grundsätzlich kann das expandierbare Material aber auch derart ausgelegt sein, dass es in expandiertem Zustand eine geschlossenzellige Zellstruktur oder eine gemischtzellige Zellstruktur bildet. Auch wenn grundsätzlich andere Strukturen möglich sind, hat sich die offenzellige Struktur im Hinblick auf die Schalldämmung als besonders zweckmässig erwiesen.

Das expandierbare Material hat erfindungsgemäß ein E-Modul von höchstens 20 MPa. In einer Weiterbildung hat das zweite Material ein E-Modul von höchstens 10 MPa, bevorzugt von höchstens 5 MPa. Die angegebenen Werte hinsichtlich des E-Moduls beziehen sich auf das expandierbare Material in deren Verwendungszustand im Strukturelement. Dies bedeutet, dass die Werte insbesondere nach einer allfälligen Expansion des Materials und nach einer allfälligen Aushärtung des Materials angegeben sind.

Gemäss der Erfindung umfasst das Dämmelement einen Träger, auf welchem das expandierbare Material angeordnet ist.

Der Träger ist insbesondere aus einem nicht-expandierbaren Material gefertigt.

Der Ausdruck "nicht-expandierbar" bedeutet im Zusammenhang dieser Erfindung, dass ein Material sein Volumen nicht mehr oder weniger als 10% verändert bei den für das Material vorgesehenen Prozessschritten. Dies insbesondere bei einer Temperatur von bis zu 160°C, insbesondere von 80°C bis 150°C, bevorzugt von 90°C bis 140°C. Im Vergleich mit dem expandierbaren Material, expandiert der Träger damit weit weniger bis gar nicht und verbleibt auch in expandiertem Zustand des Dämmelements im Wesentlichen in seiner ursprünglichen Form.

Das Trägerelement kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sein können; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, der vorstehend genannten Materialen sind möglich. Besonders bevorzugt sind glasfaserverstärkte Kunststoffe (GFK) oder karbonfaserverstärkte Kunststoffe (CFK).

Weiterhin kann das Trägerelement einen beliebigen Aufbau und eine beliebige Struktur aufweisen. Es kann beispielsweise massiv, hohl, und/oder geschäumt sein und/oder eine gitterartige Struktur aufweisen. Die Oberfläche des Trägerelements kann typischerweise glatt, rau und/oder strukturiert sein. Besonders bevorzugt ist der Träger als leistenförmiges Element und/oder als quaderförmiges Element ausgestaltet.

Das expandierbare Material kann prinzipiell stoff-, kraft- und/oder formschlüssig am Täger befestigt sein. Eine stoffschlüssig Befestigung, allenfalls kombiniert mit einer formschlüssigen Befestigung ist vorliegend bevorzugt.

Das expandierbare Material ist gemäss einer besonders vorteilhaften Ausführungsform auf den Träger aufgespritzt und/oder aufgeklebt, insbesondere aufgespritzt.

Wenn der Träger aus einem durch Spritzguss verarbeitbaren Material besteht, kann zur Herstellung des Dämmelements beispielsweise ein Zweikomponenten-Spritzgussverfahren eingesetzt werden. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird
das Trägerelement in ein entsprechendes Werkzeug gelegt und das expandierbare Material wird an das Trägerelement angespritzt. Selbstverständlich besteht auch
die Möglichkeit das expandierbare Material anstelle des Anspritzens oder zusätzlich durch spezielle Befestigungsmittel oder -verfahren am Träger zu befestigen.

Der Träger erstreckt in Richtung der Längsachse des Dämmelements im Besonderen wenigstens entlang 75%, insbesondere wenigstens entlang 90% oder entlang 100%, der gesamten Länge des Dämmelements. Dadurch wird das expandierbare Material bestmöglich gestützt, so dass es sich präzise im Hohlraum positionieren lässt.

Im Besonderen umgreift das expandierbare Material in nicht-expandiertem Zustand den Träger bereichsweise formschlüssig, insbesondere umgreift das expandierbare Material in nicht-expandiertem Zustand einen oder mehrere Vorsprünge des Trägers. Damit kann das expandierbare Material auch in nicht-expandiertem Zustand ohne zusätzlichen Massnahmen am Träger fixiert werden oder die Fixierung am Träger kann verbessert werden.

Insbesondere bedeckt das expandierbare Material in nicht-expandiertem Zustand eine entlang der Längsachse des Dämmelements vorliegende Mantelfläche des Trägers zu wenigstens 40%, insbesondere zu wenigstens 50%, bevorzugt zu wenigstens 60% oder wenigstens 75%. Im Speziellen bedeckt das expandierbare Material in nicht-expandiertem Zustand eine entlang der Längsachse des Dämmelements vorliegende Mantelfläche des Trägers zu 100%. Dies ermöglich das vollständige Ausfüllen des Hohlraums auch mit relativ dünnen Schichten aus expandierbarem Material und kommt einer homogenen Verteilung Materials im expandierten Zustand zu Gute.

Weiter kann es vorteilhaft sein, wenn der Träger Vertiefungen und/oder erfindungsgemäß Durchbrüche aufweist, welche sich insbesondere von einer äusseren Oberfläche des Dämmelements ins Innere des Trägers und/oder erfindungsgemäß durch diesen hindurch erstrecken. Damit ist es möglich, das expandierbare Material bei der Expansion in den Träger hinein und/oder durch den Träger hindurch in Bereiche zu leiten, in welchen z.B. kein expandierbares Material auf dem Träger vorliegt. Der Träger kann dadurch nach erfolgter Expansion des expandierbaren Materials vollständig und unter Vermeidung von unerwünschten Freiräumen vollständig in das expandierte Material eingebettet werden. Dies kommt der Dämmwirkung insgesamt zu Gute.

Die Vertiefungen und/oder Durchbrüche können beispielsweise zylindrisch und/oder quaderförmig ausgestaltet sein.

Nach einer weiteren vorteilhaften Ausführungsform liegt das expandierbare Material in nicht-expandiertem Zustand im Bereich einer Oberfläche des Dämmelements in mehreren räumlich getrennten Bereichen vor. Die Oberfläche des Dämmelements wird in diesem Fall durch mehrere voneinander separierte Bereiche mit expandierbarem Material und der nicht bedeckten Oberfläche des Trägers gebildet. In diesem Fall bedeckt das expandierbare Material den Träger nur teilweise. Grundsätzlich kann das expandierbare Material in nicht-expandiertem Zustand in den räumlich getrennten Bereichen durch Materialbrücken, welche beispielsweise im Innern des Trägers verlaufen, miteinander verbunden sein. Solche räumlich getrennten Anordnungen des expandierbaren Materials an der Oberfläche können vorteilhaft sein, um die Verteilung des expandierbaren Materials im Hohlraum beim Expandieren gezielt zu kontrollieren.

Im Besonderen bilden die räumlich getrennten Bereiche aus expandierbarem Material in nicht-expandiertem Zustand an der Oberfläche des Dämmelements rechteckige, quadratische und/oder kreisförmige Bereiche.

Besonders bevorzugt bilden die räumlich getrennten Bereiche aus expandierbarem Material in nicht-expandiertem Zustand zusammen mit den nicht bedeckten Oberflächenbereichen des Trägers ein regelmässiges Muster. Insbesondere handelt es sich um ein schachbrettartiges Muster, ein Streifenmuster oder ein Punktmuster.

Dabei kann es vorteilhaft sein, wenn in wenigstens einem Teil der Bereiche zwischen den räumlich getrennten Bereichen mit expandierbarem Material Vertiefungen und/oder Durchbrüche im Träger vorliegen, welche sich von einer äusseren Oberfläche des Dämmelements ins Innere des Trägers und/oder durch diesen Hindurch erstrecken.

Gemäss einer weiteren vorteilhaften Ausführungsform bildet das expandierbare Material in nicht-expandiertem Zustand einen einstückigen und/oder zusammenhängenden Körper. Dies insbesondere in Kombination mit einem Träger, welcher bevorzugt als leistenförmiges Element vorliegt und sich im Wesentlichen entlang der gesamten Länge des Dämmelements erstreckt.

Besonders vorteilhaft bedeckt das expandierbare Material in nicht-expandiertem Zustand eine entlang der Längsachse des Dämmelements vorliegende Mantelfläche des Trägers zu wenigstens 50%, insbesondere 60 - 90%. Die vom expandierbaren Material nicht bedeckte Oberfläche bildet dabei vorzugsweise einen zusammenhängenden Oberflächenbereich des Trägers, insbesondere eine streifenförmigen Bereich welche in einer Richtung entlang der Längsachse verläuft.

Gemäss einer besonders bevorzugten Ausführungsform verfügt das Dämmelement in einer Richtung entlang der Längsachse alternierend über Vorsprünge und Vertiefungen, welche in nicht expandiertem Zustand jeweils mit expandierbarem Material bedeckt sind. Dadurch kann im Besonderen die Expansion des expandierbaren Materials gesteuert werden.

Bevorzugt ist das Dämmelement durch eine stoff-, kraft- und/oder formschlüssige Verbindung mit dem Strukturelement verbunden, so dass die Position des Dämmelements auch mit dem expandierbaren Material in nicht-expandiertem Zustand festgelegt ist.

Hierfür verfügt das Dämmelement, insbesondere ein Träger des Dämmelements, über wenigstens eine Befestigungsvorrichtung zum Befestigen des Dämmelements am Strukturelement. Dies kann beispielsweise eine Lasche, ein Vorsprung und/oder Bohrung sein.

Ein weiterer Aspekt der vorliegenden Erfindung betrifft ein Dämmelement, welches zur Verwendung in einem wie vorstehend beschriebenem Strukturelement geeignet ist. Das Dämmelement ist dabei insbesondere wie vorstehend beschrieben ausgestaltet.

Einzelheiten und Vorteile der Erfindung werden im Folgenden anhand von Ausführungsbeispielen und mit Bezug auf schematische Zeichnungen beschrieben.

### Kurze Beschreibung der Zeichnungen

Die zur Erläuterung der Ausführungsbeispiele verwendeten Zeichnungen zeigen;
- Fig. 1: eine schematische, beispielhafte Darstellung einer Karosserie eines Kraftfahrzeuges;
- Fig. 2: eine perspektivische Ansicht eines quaderförmigen Dämmelements von schräg oben;
- Fig. 3: eine perspektivische Ansicht des quaderförmigen Dämmelements aus Fig. 2 von schräg unten;
- Fig. 4: eine perspektivische Ansicht eines Abschnitts eines länglichen und hohlen Strukturelements eines Kraftfahrzeugs in halbtransparenter Darstellung mit dem darin angeordneten Dämmelement aus Fig. 2;
- Fig. 5: eine Aufsicht entlang der Längsachse auf das Strukturelement aus Fig. 2 wobei das expandierbare Material in nicht-expandiertem Zustand vorliegt;
- Fig. 6: die Situation aus Fig. 5 nach erfolgter Expansion des expandierbaren Materials;
- Fig. 7: eine Aufsicht auf die Oberseite eines weiteren Dämmelements, welches zur Dämmung einer A-Säule eines Kraftfahrzeugs vorgesehen ist;
- Fig. 8: eine perspektivische Ansicht des Querschnitts im Bereich der Linie A-A in Fig. 7;
- Fig. 9: eine Aufsicht auf eine Unterseite des Dämmelements aus Fig. 7.

### Wege zur Ausführung der Erfindung

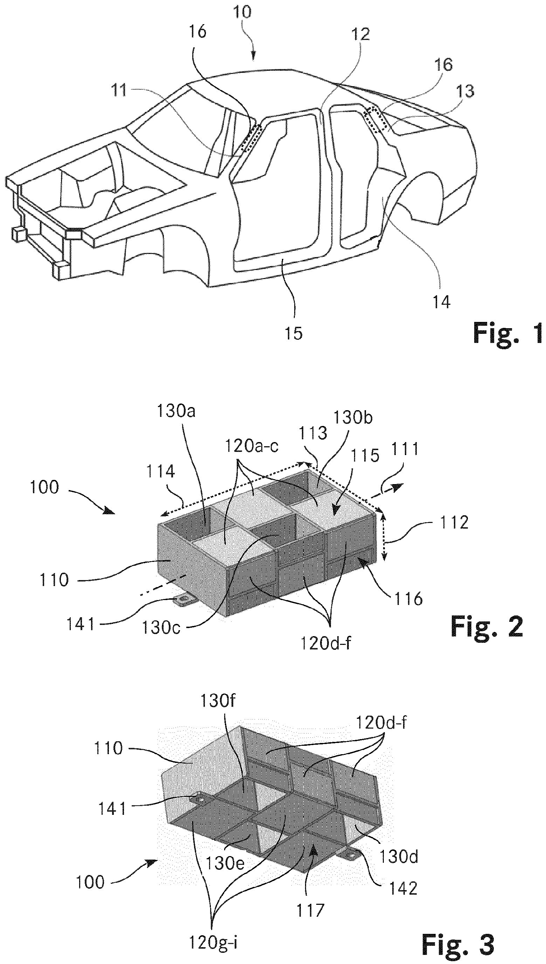

In Fig. 1 ist eine Karosserie 10 eines Automobils schematisch dargestellt. Die Karosserie 10 weist dabei verschiedene Strukturelemente mit Hohlräumen, wie beispielsweise die A-Säule 11, die B-Säule 12, die C-Säule 13, den Radlauf 14 oder Seitenschweller 15 auf. Solche Strukturelemente mit Hohlräumen können nun durch erfindungsgemässe Dämmelemente 16, welche in Fig. 1 schematisch als zylindrische Elemente dargestellt sind, akustisch gedämmt werden.

Fig. 2 zeigt eine perspektivische Ansicht eines quaderförmigen Dämmelements 100. Das Dämmelement 100 verfügt über einen quaderförmigen Träger 110 mit einer Längsachse 111, welche parallel zu den Längskanten des Trägers 110 verläuft. Der Träger 110 besteht z.B. aus Nylon. Eine Länge 114 des Trägers 110, in Richtung der Längsachse 111 gemessen wird, ist dabei ca. 1.5 mal so gross wie die senkrecht zur Längsachse 111 gemessene Breite 113 des Trägers 110 und ca. 3 mal so gross wie sie senkrecht zur senkrecht zur Längsachse 111 gemessen Höhe 112 des Trägers 110. Die Länge 114 kann z.B. 7.5 cm betragen, während die Breite 113 ca. 5 cm und die Höhe 112 ca. 2.5 cm misst.

Im Bereich der oberen und grossen Seitenfläche 115 des Trägers 110 sind an der Oberfläche des Trägers 110 drei räumlich getrennte und quadratische Lagen 120a, 120b, 120c aus expandierbarem Material in einem schachbrettähnlichen Muster angebracht. In den Bereichen neben den quadratischen Lagen 120a - c sind drei quaderförmige Vertiefungen 130a, 130b, 130c angeordnet, welche sich ins Innere des Trägers 110 erstrecken.

Im Bereich der vorderen und kleineren Seitenfläche 116 des Trägers 110 sind an der Oberfläche des Trägers 110 drei räumlich getrennte und rechteckige Lagen 120d, 120e, 120f aus expandierbarem Material ebenfalls in einem schachbrettähnlichen Muster angebracht. In den Bereichen zwischen den rechteckigen Lagen 120d, 120e, 120f liegt die im Wesentlichen ebene vordere Seitenfläche 116 des Trägers 110 frei. Die Stirnflächen des Trägers 110, welche senkrecht zur Längsachse 110 stehen, liegen ebenfalls frei bzw. sie sind nicht mit expandierbarem Material bedeckt.

Die in Fig. 2 nicht dargestellte hintere Seitenfläche ist gleich ausgestaltet wie die vordere Seitenfläche 116 und trägt entsprechend ebenfalls drei räumlich getrennte und rechteckige Lagen aus expandierbarem Material.

Wie in Fig. 3 gezeigt, sind an der der oberen Seitenfläche 115 gegenüberliegenden unteren Seitenfläche 117 wiederum drei räumlich getrennte und quadratische Lagen 120g, 120h, 120i aus expandierbarem Material in einem schachbrettähnlichen Muster angebracht. In den Bereichen neben den quadratischen Lagen 120g - i sind drei quaderförmige Vertiefungen 130d, 130e, 130f angeordnet, welche sich ins Innere des Trägers 110 erstrecken.

An den gegenüberliegenden Stirnseiten des Trägers ist jeweils in einem zentralen Bereich der unteren Kante je ein Vorsprung 141, 142 mit einer Bohrung angeordnet, mit welchen das Dämmelement 100 in einem Strukturelement befestigt werden kann.

Das expandierbare Material des Dämmelements 100, welches beispielsweise durch Hitzeeinwirkung aktivierbar ist, liegt in den Fig. 2 und 3 in nicht-expandiertem Zustand vor und ist z.B. so gewählt, das es eine Expansionsrate von beispielsweise 1'000% und in expandiertem Zustand eine offenzellige Zellstruktur hat.

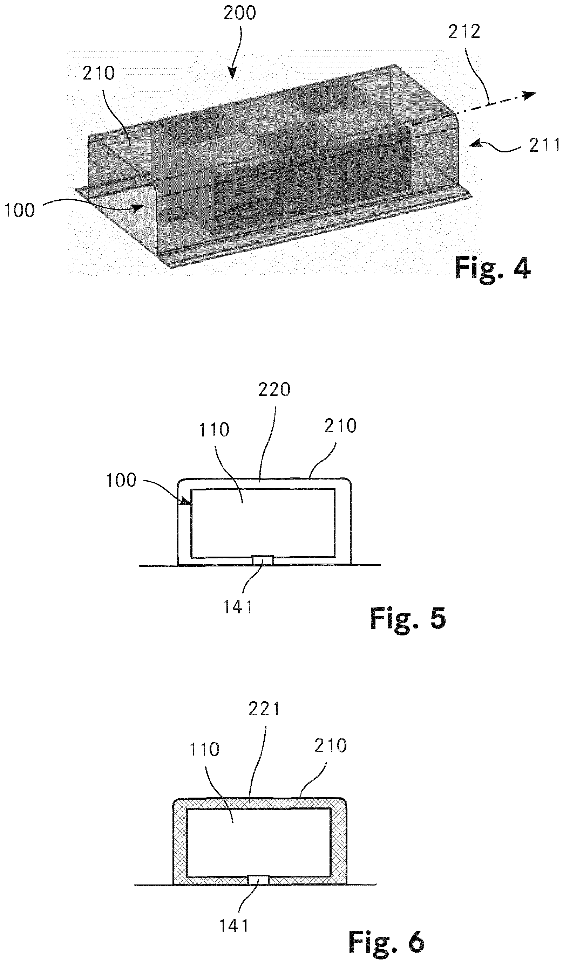

Fig. 4 zeigt einen Abschnitt eines länglichen Strukturelements 200 eines Kraftfahrzeugs, z.B. einen Abschnitt einer A-Säule. Das Strukturelement 200 verfügt über einen quaderförmigen Hohlraum 211 mit einer Längsachse 212, wobei im Hohlraum 211 das Dämmelement 100 aus den Fig. 2 und 3 vorliegt. Die Längsachse des Dämmelements 100 verläuft dabei im Wesentlichen parallel zur Längsachse 212 des Hohlraums 211. Das Dämmelement 100 ist mittels den Vorsprüngen 141, 142 im Strukturelement 200 befestigt.

Fig. 5 zeigt eine Aufsicht auf das Strukturelement 200 aus der in Fig. 4 linken Seite, wobei das expandierbare Material wie in den Fig. 2 und 3 in nicht-expandiertem Zustand vorliegt. Dabei liegt zwischen Dämmelement 100 und der inneren Wandung des Strukturelements 200 ein die Mantelfläche des Dämmelements 100 umlaufender Freiraum 220 vor.

Fig. 6 zeigt die Situation nach erfolgter Expansion des expandierbaren Materials, z.B. nach Hitzeinwirkung. Der ursprüngliche Freiraum 220, wie auch die im Träger 110 vorliegenden Vertiefungen (siehe Fig. 2 und 3), sind nun vollständig mit einem Schaukörper 221 aus expandierbaren Material in expandiertem Zustand gefüllt. Der Schaumkörper 221 erstreckt sich dabei entlang der gesamten Länge 114 (siehe Fig. 2 und 3) des Dämmelements 100.

Damit wird eine akustische Dämmung entlang der Längsachse 212 des Hohlraums 211 des Strukturelements 200 als in allen Richtungen senkrecht dazu erreicht.

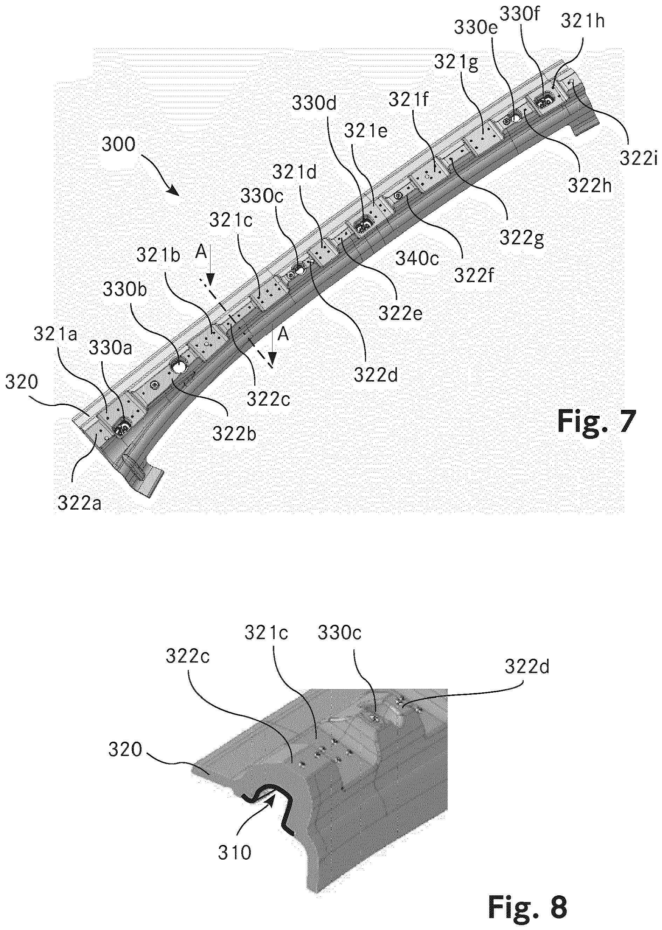

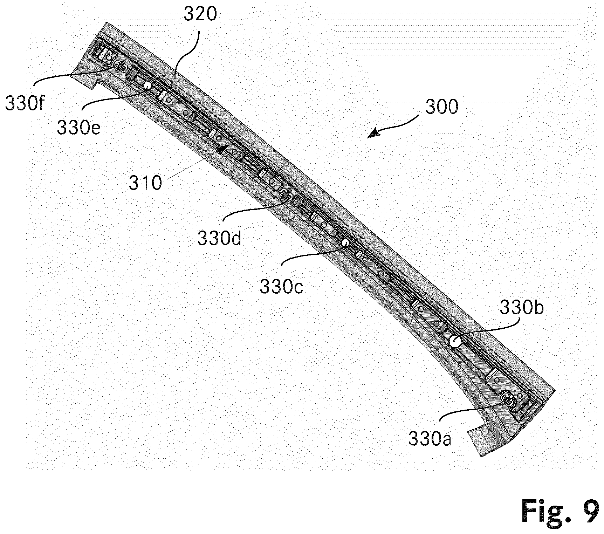

Die Fig. 7 - 9 zeigen ein weiteres, längliches Dämmelement 300, welches zur Dämmung einer A-Säule eines Kraftfahrzeugs vorgesehen ist. Das Dämmelement 300 verfügt über einen Träger 310 (siehe Fig. 8), auf welchem ein in nicht-expandiertem Zustand einstückiger und zusammenhängender Körper 320 aus einem expandierbaren Material aufgespritzt wurde.

Der Träger 310 erstreckt sich im Wesentlichen entlang der gesamten Länge in einem zentralen Bereich des Dämmelements 300 und hat die Form einer profilierten Leiste. Das expandierbare Material 320 bedeckt den Träger 310 an der äusseren Oberfläche (Oberseite in Fig. 8, konvexer Bereich des Trägers), während der Träger 310 an der gegenüberliegenden inneren Oberfläche (Unterseite in Fig. 8, konkaver Bereich des Trägers) unbedeckt ist. Das expandierbare Material 320 umgreift des Weiteren verschiedene nicht näher bezeichnete Vorstände auf dem Träger formschlüssig.

Entlang der Längsrichtung verfügt das Dämmelement 300 alternierend über abgeflachte Vorsprünge 322a, 322b, 322c, 322d, 322e, 322f, 322g, 322h, 322i und abgeflachte Vertiefungen 321a, 321b, 321c, 321d, 321e, 321f, 321h.

Entlang der Längsrichtung des Dämmelements 300 sind zudem Durchbrüche 330a, 330b, 330c, 330d, 330e, 330f im Körper 320 aus expandierbarem Material und dem darunter liegenden Träger 310 eingebracht.

Die Länge des Dämmelement 300 beträgt z.B. 55 cm, während Breite und Höhe je ca. 5 cm messen. Das expandierbare Material ist beispielsweise dasselbe wie jenes welches beim ersten Dämmelement 100 verwendet wurde.

Die vorstehend beschriebenen Ausführungsbeispiele sind lediglich als illustrative Beispiele zu verstehen, welche im Rahmen des Gegenstandes der vorliegenden Ansprüche beliebig abgeändert werden können.

### Bezugszeichenliste

- 10: Karosserie
- 11: A-Säule
- 12: B-Säule
- 13: C-Säule
- 14: Radlauf
- 15: Türschweller
- 16: Dämmelement (unspezifisch)
- 100: Quaderförmiges Dämmelement
- 110: Quaderförmiger Träger
- 111: Längsachse
- 112: Höhe
- 113: Breite
- 114: Länge
- 115: Obere Seitenfläche
- 116: Vordere Seitenfläche
- 117: Untere Seitenfläche
- 120a...c: quadratische Lagen aus expandierbarem Material
- 120d...f: rechteckige Lagen aus expandierbarem Material
- 120g... i: quadratische Lagen aus expandierbarem Material
- 130a..f: Vertiefungen
- 141, 142: Vorsprünge mit Bohrungen
- 200: Strukturelement
- 211: Hohlraum
- 212: Längsachse
- 220: Freiraum
- 221: expandierter Schaumkörper
- 300: Weiteres Dämmelement
- 310: Träger
- 320: Körper aus expandierbarem Material
- 321a...h: Vertiefungen
- 322a...i: Vorsprünge
- 330a...f: Durchbrüche

## Patentansprüche

1. Strukturelement (11, 12, 13, 14, 15, 200) eines Kraftfahrzeugs, wobei das Strukturelement einen Hohlraum (211) aufweist und im Hohlraum (211) ein längliches Dämmelement (100, 300) zur akustischen Dämmung angeordnet ist, wobei
eine Längsachse (111) des Dämmelements (100) im Wesentlichen parallel zu einer Längsachse (212) des Hohlraums (211) ausgerichtet ist und
das Dämmelement (100, 300) ein expandierbares Material (120a - 120i, 320) umfasst, welches derart angeordnet und/oder ausgelegt ist, dass das Dämmelement (100, 300) den Hohlraum (211) entlang der gesamten Länge (114) des Dämmelements (100, 300) vollständig ausfüllt, wenn das expandierbare Material (120a - 120i, 320) in expandiertem Zustand (221) vorliegt, **dadurch gekennzeichnet, dass**
das expandierbare Material (120a - 120i, 320) nach einer Expansion und nach einer allfälligen Aushärtung ein E-Modul von höchstens 20 MPa aufweist, und
das Dämmelement (100, 300) einen Träger (110, 310) umfasst, auf welchem das expandierbare Material (120a - 120i, 320) angeordnet ist, wobei
der Träger (110, 310) Durchbrüche (330a, ... 330f) aufweist, welche sich von einer äusseren Oberfläche des Dämmelements durch den Träger (110, 310) hindurch erstrecken, so dass das expandierbare Material (120a - 120i, 320) bei der Expansion durch den Träger (110, 310) hindurch in Bereiche geleitet wird, in welchen kein expandierbares Material (120a - 120i, 320) auf dem Träger vorliegt.

2. Strukturelement nach Anspruch 1, wobei ein Verhältnis der Länge (114) des Dämmelements (100, 300) in nicht-expandiertem Zustand zu einer Breite (113) und/oder zu einer Höhe (112) des Dämmelements in nicht-expandiertem Zustand > 0.5, insbesondere > 1, vorteilhafterweise > 1.5, insbesondere > 2, im Speziellen > 4, besonders bevorzugt > 5 oder > 7 ist.

3. Strukturelement nach wenigstens einem der Ansprüche 1 - 2, wobei das expandierbare Material (120a - 120i, 320) eine Expansionrate von mehr als 500%, insbesondere mehr als 1'000%, besonders bevorzugt von mehr als 1'500%, aufweist.

4. Strukturelement nach wenigstens einem der Ansprüche 1 - 3, wobei das expandierbare Material (120a - 120i, 320) derart ausgelegt ist, dass es in expandiertem Zustand (221) eine offenzellige Zellstruktur bildet.

5. Strukturelement nach wenigstens einem der Ansprüche 1 - 4, wobei der Träger (110, 310) aus einem nicht-expandierbaren Material gefertigt ist.

6. Strukturelement nach wenigstens einem der Ansprüche 1 - 5, wobei das expandierbare Material (120a - 120i) in nicht-expandiertem Zustand im Bereich einer Oberfläche des Dämmelements (115, 116, 117) in mehreren räumlich getrennten Bereichen (120a - 120i) vorliegt.

7. Strukturelement nach Anspruch 6, wobei die räumlich getrennten Bereiche (120a - 120i) an einer Oberfläche des Dämmelements (100) ein regelmässiges Muster bilden, insbesondere ein schachbrettartiges Muster, ein Streifenmuster oder ein Punktmuster.

8. Strukturelement nach wenigstens einem der Ansprüche 1 - 7, wobei das expandierbare Material in nicht-expandiertem Zustand einen einstückigen und/oder zusammenhängenden Körper bildet (320).

9. Strukturelement nach wenigstens einem der Ansprüche 1 - 8, wobei sich das expandierbare Material in nicht-expandiertem Zustand in Richtung der Längsachse (111) des Dämmelements (100, 300) wenigstens entlang 75%, insbesondere wenigstens entlang 90% oder entlang 100%, der gesamten Länge des Dämmelements (100, 300) erstreckt.

10. Strukturelement nach wenigstens einem der Ansprüche 1 - 9, wobei das expandierbare Material in nicht-expandiertem (120a - 120i, 320) Zustand eine entlang der Längsachse (111) des Dämmelements vorliegende Mantelfläche des Trägers zu wenigstens 40%, insbesondere zu wenigstens 50%, bevorzugt wenigstens 75%, bedeckt.

11. Strukturelement nach wenigstens einem der Ansprüche 1 - 10, wobei das expandierbare Material (320) in nicht-expandiertem Zustand den Träger (310) bereichsweise formschlüssig umgreift, insbesondere umgreift das expandierbare Material in nicht-expandiertem Zustand (320) einen oder mehrere Vorsprünge des Trägers (320).

12. Strukturelement nach wenigstens einem der Ansprüche 1 - 11, wobei das Dämmelement (300) in einer Richtung entlang der Längsachse alternierend über Vorsprünge (322a - 322i) und Vertiefungen (321a - 321h) verfügt, welche in nicht expandiertem Zustand jeweils mit expandierbarem Material (320) bedeckt sind.

13. Strukturelement nach wenigstens einem der Ansprüche 1 - 12, wobei das Dämmelement (100, 300) mit dem expandierbaren Material (120a - 120i, 320) in nicht-expandiertem Zustand ein geringeres Volumen aufweist als ein Abschnitt des Hohlraums (211) in welchem das Dämmelement (100, 300) vorliegt, insbesondere so dass zwischen Wandung des Hohlraums (211) und Dämmelement (100, 300) ein Freiraum (220) vorliegt.

14. Verwendung eines Dämmelements (100, 300) zur akustischen Dämmung in einem Strukturelement (11, 12, 13, 14, 15, 200) eines Kraftfahrzeugs, wobei das Dämmelement (100, 300) und das Strukturelement wie in einem der Ansprüche 1 - 13 definiert und angeordnet sind.

## Claims

1. Structural element (11, 12, 13, 14, 15, 200) of a motor vehicle, wherein the structural element has a cavity (211) and an elongate insulating element (100, 300) for acoustic insulation is arranged in the cavity (211), wherein
a longitudinal axis (111) of the insulating element (100) is oriented substantially parallel to a longitudinal axis (212) of the cavity (211) and
the insulating element (100, 300) comprises an expandable material (120a-120i, 320), which is arranged and/or configured in such a way that the insulating element (100, 300) fills the cavity (211) completely along the entire length (114) of the insulating element (100, 300) when the expandable material (120a-120i, 320) is in the expanded state (221), **characterized in that**
the expandable material (120a-120i, 320) has a modulus of elasticity of at most 20 MPa after an expansion and after a possible hardening, and
the insulating element (100, 300) comprises a base (110, 310), on which the expandable material (120a-120i, 320) is arranged, wherein
the base (110, 310) has breakthroughs (330a, ... 330f), which extend from an outer surface of the insulating element through the base (110, 310), such that the expandable material (120a-120i, 320) is conducted during the expansion through the base (110, 310) into regions in which no expandable material (120a-120i, 320) is present on the base.

2. Structural element according to Claim 1, wherein a ratio of the length (114) of the insulating element (100, 300) in the unexpanded state to a width (113) and/or to a height (112) of the insulating element in the unexpanded state is > 0.5, in particular > 1, advantageously > 1.5, in particular > 2, specifically > 4, particularly preferably > 5 or > 7.

3. Structural element according to at least one of Claims 1-2, wherein the expandable material (120a-120i, 320) has a rate of expansion of more than 500%, in particular more than 1000%, particularly preferably of more than 1500%.

4. Structural element according to at least one of Claims 1-3, wherein the expandable material (120a-120i, 320) is configured in such a way that in the expanded state (221) it forms an open-cell cell structure.

5. Structural element according to at least one of Claims 1-4, wherein the base (110, 310) is manufactured from a non-expandable material.

6. Structural element according to at least one of Claims 1-5, wherein the expandable material (120a-120i) in the unexpanded state is present in the region of a surface of the insulating element (115, 116, 117) in multiple spatially separate regions (120a-120i).

7. Structural element according to Claim 6, wherein, on a surface of the insulating element (100), the spatially separate regions (120a-120i) form a regular pattern, in particular a chequerboard pattern, a stripe pattern or a point pattern.

8. Structural element according to at least one of Claims 1-7, wherein the expandable material in the unexpanded state forms a one-piece and/or coherent body (320) .

9. Structural element according to at least one of Claims 1-8, wherein the expandable material in the unexpanded state extends in the direction of the longitudinal axis (111) of the insulating element (100, 300) at least along 75%, in particular at least along 90% or along 100%, of the entire length of the insulating element (100, 300).

10. Structural element according to at least one of Claims 1-9, wherein the expandable material in the unexpanded state (120a-120i, 320) covers a lateral surface, which is present along the longitudinal axis (111) of the insulating element, of the base to an extent of at least 40%, in particular to an extent of at least 50%, preferably at least 75%.

11. Structural element according to at least one of Claims 1-10, wherein the expandable material (320) in the unexpanded state encloses the base (310) in a form-fitting manner in certain regions, in particular the expandable material in the unexpanded state (320) encloses one or more protrusions of the base (320).

12. Structural element according to at least one of Claims 1-11, wherein the insulating element (300) has in a direction along the longitudinal axis alternating protrusions (322a-322i) and recesses (321a-321h), each of which in the unexpanded state is covered with expandable material (320).

13. Structural element according to at least one of Claims 1-12, wherein the insulating element (100, 300) with the expandable material (120a-120i, 320) in the unexpanded state has a smaller volume than a portion of the cavity (211) in which the insulating element (100, 300) is present, in particular such that a free space (220) is present between the wall of the cavity (211) and the insulating element (100, 300).

14. Use of an insulating element (100, 300) for acoustic insulation in a structural element (11, 12, 13, 14, 15, 200) of a motor vehicle, wherein the insulating element (100, 300) and the structural element are as defined and arranged in one of Claims 1-13.

## Revendications

1. Élément structurel (11, 12, 13, 14, 15, 200) d'un véhicule automobile, l'élément structurel présentant une cavité (211) et un élément isolant allongé (100, 300) étant agencé dans la cavité (211) pour l'isolation acoustique,
un axe longitudinal (111) de l'élément isolant (100) étant orienté essentiellement parallèlement à un axe longitudinal (212) de la cavité (211) et
l'élément isolant (100, 300) comprenant un matériau expansible (120a à 120i, 320) qui est agencé et/ou conçu de telle sorte que l'élément isolant (100, 300) remplit complètement la cavité (211) le long de toute la longueur (114) de l'élément isolant (100, 300) lorsque le matériau expansible (120a à 120i, 320) est à l'état expansé (221), **caractérisé en ce que**
le matériau expansible (120a à 120i, 320) présente un module d'élasticité d'au plus 20 MPa après une expansion et après un éventuel durcissement, et
l'élément isolant (100, 300) comprend un support (110, 310) sur lequel est agencé le matériau expansible (120a à 120i, 320),
le support (110, 310) présentant des percées (330a, ... 330f) qui s'étendent à travers le support (110, 310) à partir d'une surface extérieure de l'élément isolant de telle sorte que le matériau expansible (120a à 120i, 320) est guidé à travers le support (110, 310) lors de l'expansion dans des zones où aucun matériau expansible (120a à 120i, 320) n'est présent sur le support.

2. Élément structurel selon la revendication 1, dans lequel un rapport entre la longueur (114) de l'élément isolant (100, 300) à l'état non expansé et une largeur (113) et/ou une hauteur (112) de l'élément isolant à l'état non expansé est > 0,5, notamment > 1, avantageusement > 1,5, notamment > 2, spécialement > 4, de manière particulièrement préférée > 5 ou > 7.

3. Élément structurel selon au moins l'une quelconque des revendications 1 à 2, dans lequel le matériau expansible (120a à 120i, 320) présente un taux d'expansion supérieur à 500 %, notamment supérieur à 1 000 %, de manière particulièrement préférée supérieur à 1 500 %.

4. Élément structurel selon au moins l'une quelconque des revendications 1 à 3, dans lequel le matériau expansible (120a à 120i, 320) est conçu de telle sorte qu'il forme une structure cellulaire à cellules ouvertes à l'état expansé (221).

5. Élément structurel selon au moins l'une quelconque des revendications 1 à 4, dans lequel le support (110, 310) est fabriqué à partir d'un matériau non expansible.

6. Élément structurel selon au moins l'une quelconque des revendications 1 à 5, dans lequel le matériau expansible (120a à 120i) est présent à l'état non expansé dans la zone d'une surface de l'élément isolant (115, 116, 117) dans plusieurs zones spatialement séparées (120a à 120i).

7. Élément structurel selon la revendication 6, dans lequel les zones spatialement séparées (120a à 120i) forment un motif régulier sur une surface de l'élément isolant (100), notamment un motif en damier, un motif à bandes ou un motif à points.

8. Élément structurel selon au moins l'une quelconque des revendications 1 à 7, dans lequel le matériau expansible forme un corps monobloc et/ou cohérent (320) à l'état non expansé.

9. Élément structurel selon au moins l'une quelconque des revendications 1 à 8, dans lequel le matériau expansible à l'état non expansé s'étend dans la direction de l'axe longitudinal (111) de l'élément isolant (100, 300) au moins le long de 75 %, notamment au moins le long de 90 % ou le long de 100 %, de la longueur totale de l'élément isolant (100, 300).

10. Élément structurel selon au moins l'une quelconque des revendications 1 à 9, dans lequel le matériau expansible à l'état non expansé (120a à 120i, 320) couvre au moins 40 %, notamment au moins 50 %, de préférence au moins 75 %, d'une surface d'enveloppe du support située le long de l'axe longitudinal (111) de l'élément isolant.

11. Élément structurel selon au moins l'une quelconque des revendications 1 à 10, dans lequel le matériau expansible (320) à l'état non expansé entoure le support (310) par zones par complémentarité de forme, notamment le matériau expansible à l'état non expansé (320) entoure une ou plusieurs saillies du support (320).

12. Élément structurel selon au moins l'une quelconque des revendications 1 à 11, dans lequel l'élément isolant (300) comporte alternativement, dans une direction le long de l'axe longitudinal, des saillies (322a à 322i) et des creux (321a à 321h) qui, à l'état non expansé, sont respectivement recouverts de matériau expansible (320) .

13. Élément structurel selon au moins l'une quelconque des revendications 1 à 12, dans lequel l'élément isolant (100, 300) avec le matériau expansible (120a à 120i, 320) présente, à l'état non expansé, un volume plus faible qu'une section de la cavité (211) dans laquelle se trouve l'élément isolant (100, 300), notamment de telle sorte qu'un espace libre (220) est présent entre la paroi de la cavité (211) et l'élément isolant (100, 300).

14. Utilisation d'un élément isolant (100, 300) pour l'isolation acoustique dans un élément structurel (11, 12, 13, 14, 15, 200) d'un véhicule automobile, l'élément isolant (100, 300) et l'élément structurel étant définis et agencés tel que dans l'une quelconque des revendications 1 à 13.
